(19) Europäisches Patentamt
European Patent Office
Office européen des brevets

(11) **EP 0 958 651 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(21) Anmeldenummer: **98904015.9**

(22) Anmeldetag: **09.01.1998**

(51) Int Cl.$^7$: **H02P 8/22**

(86) Internationale Anmeldenummer:
**PCT/DE98/00053**

(87) Internationale Veröffentlichungsnummer:
**WO 98/035436 (13.08.1998 Gazette 1998/32)**

(54) **VERFAHREN UND VORRICHTUNG ZUR SCHRITTMOTORANSTEUERUNG**

METHOD AND DEVICE FOR CONTROLLING A STEPPING MOTOR

PROCEDE ET DISPOSITIF DE COMMANDE DE MOTEUR PAS-A-PAS

(84) Benannte Vertragsstaaten:
**DE FR GB IT NL SE**

(30) Priorität: **06.02.1997 DE 19704296**

(43) Veröffentlichungstag der Anmeldung:
**24.11.1999 Patentblatt 1999/47**

(73) Patentinhaber: **Leica Microsystems Wetzlar GmbH**
**35530 Wetzlar (DE)**

(72) Erfinder: **MAINBERGER, Robert**
**D-35619 Braunfels (DE)**

(74) Vertreter: **Stamer, Harald**
**Leica Microsystems International Holdings GmbH,**
**Konzernstelle Patente + Marken,**
**Postfach 20 20**
**35530 Wetzlar (DE)**

(56) Entgegenhaltungen:
**WO-A-89/07859**

• **PATENT ABSTRACTS OF JAPAN vol. 095, no. 003, 28.April 1995 & JP 06 334528 A (FUJI ELECTRIC CO LTD), 2.Dezember 1994,**

**Beschreibung**

Die Erfindung betrifft ein Verfahren und eine Vorrichtung zur Ausübung des Verfahrens zur Ansteuerung eines Schrittmotors gemäß dem Oberbegriff der unabhängigen Ansprüche.

Schrittmotore werden heute in vielfältigen Anwendungen zur Positionierung in technischen Geräten eingesetzt. Sie erlauben schrittgenaue Positionierung ohne Rückmeldung der Position. Werden hohe Anforderungen an die Positioniergenauigkeit gestellt, ist in der Regel ein Betrieb der Schrittmotore im Mikroschrittbetrieb erforderlich. Dabei stellt der Anwender auch bei hohen Verfahrgeschwindigkeiten, die zum schnellen Erreichen weiter entfernter Positionen erforderlich sind, hohe Ansprüche an den Rundlauf und an die Vibrationsarmut des Motors.

Der Einsatz von Schrittmotoren im Mikroschrittbetrieb wird zum Beispiel in

- "Elektrische Kleinmotoren" von H. Moczala et al., Expert-Verlag, 1993, Seiten 261-263, und

- "Schrittmotorantriebe" von F.Prautzsch, Franzis-Verlag, 1988, Seiten 70-76,

beschrieben. Die Grundlagen sollen hier kurz dargelegt werden.

Unter Mikroschrittbetrieb versteht man die Versorgung des Schrittmotors mit sinusförmig abgestuften Motorströmen anstelle von rechteckblockförmigen Motorströmen beim Voll- und Halbschrittbetrieb. Die Werte der gestuften Motorströme liegen als Strom-Sollwerte in einer abgespeicherten Sinustabelle vor. Die einzelnen, aufeinanderfolgenden Tabellenwerte werden von der Motorsteuerung nacheinander ausgelesen und daraus die Motorströme erzeugt. Jedem Tabellenwert entspricht dabei ein zeitlich begrenzter Motorstromwert einer bestimmten Höhe. Jeweils ein neuer Motorstromwert pro Phase veranlaßt den Motor, um einen Mikroschritt weiter zu fahren. Die Sinustabelle ist so aufgebaut, daß durch Auslesen der aufeinanderfolgenden Tabellenplätze stets eine feste Schrittweite gegeben ist.

Die Anzahl der Vollschritte eines Schrittmotors ist bauartbedingt. Eine ganze Sinusperiode des Motorstroms entspricht einer Drehung des Schrittmotors um vier Vollschritte. Daher entspricht die Anzahl der Tabellenplätze für eine volle Sinusperiode der Anzahl der Mikroschritte, die auf vier Vollschritte entfallen. Die Anzahl der Tabellenplätze pro Sinusperiode bestimmt also die Schrittweite der Mikroschritte und damit die Positionsauflösung des Schrittmotors.

Die Drehgeschwindigkeit des Motors wird durch Vergrößern oder Verringern der Schrittfrequenz, also durch Ändern der Zeitabstände zwischen den Schritten, eingestellt. Die für eine gewünschte Drehgeschwindigkeit des Schrittmotors benötigte Schrittfrequenz berechnet sich aus dem Produkt "Anzahl der Vollschritte des Schrittmotors mal Anzahl der Mikroschritte mal Anzahl der gewünschten Umdrehungen pro Sekunde".

In den bekannten Schrittmotor-Ansteuerungen ist in einem Speicher, beispielsweise einem EPROM, die Sinustabelle abgelegt, welche die digitalen Strom-Sollwerte für den Motorstrom enthält. Wenn der Schrittmotor eine bestimmte Zielposition anfahren soll, berechnet eine CPU die zum Erreichen der Zielposition erforderliche Mikroschrittfolge mit jeweils konstanten Schrittweiten in Form einer Folge von sinusförmig gestuften Motorstromwerten und für die gewünschte Drehgeschwindigkeit die benötigte Schrittfrequenz.

Entsprechend der Länge der von der CPU vorher berechneten Folge von Mikroschritten werden die dazu erforderlichen digitalen Strom-Sollwerte aus aufeinander folgenden Tabellenplätzen der Sinustabelle mit der von der CPU berechneten Schrittfrequenz ausgelesen.

Die ausgelesenen digitalen Strom-Sollwerte für die Motorströme werden von einem D/A-Wandler zu analogen Strom-Sollwerten gewandelt, die am Ausgang des D/A-Wandlers als gestufte analoge Signale mit annähernd sinusförmiger Grundform erscheinen. Aus den Ausgangssignalen des D/A-Wandlers wird in einer Endstufe der Motorstrom (Ist-Wert) als eine zeitliche Folge gestufter Motorstromwerte erzeugt. Diese erzeugten Motorstromwerte besitzen entsprechend den aus der Sinustabelle ausgelesenen digitalen Strom-Sollwerten eine treppenförmige Abstufung, die näherungsweise einer Sinuskurve entspricht. Auf die gleiche Weise wird für jede der Phasen des Schrittmotors für jeden Mikroschritt der entsprechend phasenverschobene Motorstromwert erzeugt. Zu jedem neuen Motorstromwert pro Phase führt der Schrittmotor einen Mikroschritt aus.

Die bis zu einer Zielposition berechnete Anzahl der sinusförmig gestuften Motorstromwerte entspricht der Anzahl der Mikroschritte, die zum Erreichen der Motor-Zielposition erforderlich sind. Die jeweils erreichte Zielposition liegt am Ende eines Mikroschrittes. Die mögliche Auflösung der Zielposition wird durch die Größe der Mikroschritte und damit durch die Anzahl der Tabellenplätze der Sinustabelle gegeben. Sollen Positionen zwischen zwei Mikroschritten angefahren werden, ist dies mit der gegebenen Sinustabelle nicht möglich. Eine Steigerung der Auflösung der Zielposition ist nur durch eine feiner geteilte Sinustabelle und damit durch eine höhere Zahl von kleineren Mikroschritten zu erreichen. Diese erfordert von der CPU die Berechnung einer längeren Schrittfolge. Für verschiedene Positionsauflösungen müssen daher verschieden fein geteilte Sinustabellen in Speichern abgelegt werden. Eine Steigerung der Drehgeschwindigkeit des Schrittmotors ist nur durch eine noch höhere Schrittfrequenz möglich. Auch dies erfordert zusätzlich höhere CPU-Kapazitäten.

Nachteilig an den bekannten Steuerungen sind die bei hoher Auflösung und gleichzeitig hoher Drehgeschwindigkeit des Schrittmotors erforderlichen sehr hohen Schrittfrequenzen und die dadurch erforderliche große CPU-Kapazität, weil die CPU die Schrittfrequenzen erzeugt und die Schrittfolgen berechnet. Beschleunigte Bewegungen erfordern darüber hinaus noch eine stetige Veränderung der Schrittfrequenz. Niedrige Beschleunigungen und hohe Drehgeschwindigkeiten im Mikroschrittbetrieb erfordern bei höheren Auflösungen sehr lange Schrittfolgen und technisch nicht mehr realisierbare, extrem schnelle Änderungen der Zeit zwischen den Schritten. Daher sind hohe Drehgeschwindigkeiten des Schrittmotors nur mit reduzierter Positionier-Auflösung, also zusätzlich gespeicherten kleineren Sinustabellen mit weniger Tabellenwerten, möglich. Eine Reduzierung der Positionier-Auflösung und damit geringere Frequenzen führen jedoch zu störend lautem Motorlauf und Vibrationen. Zur Berechnung der zur Erzeugung von Beschleunigungs- oder Verzögerungsprofilen erforderlichen Folgen von Motorstromwerten ist ebenfalls eine hohe CPU-Kapazität erforderlich. Alternativ könnte eine gewisse Anzahl von Beschleunigungsprofilen vor dem Betrieb berechnet und in einem Speicher abgelegt werden. Dies schränkt wegen des beschränkten Speicherplatzes den Verfahrbetrieb auf diese geringe Anzahl gespeicherter Beschleunigungsprofile ein.

"Eine etwas abgewandelte Form der bekannten Motorsteuerungen beschreibt die WO 89/07859. Dort wird mit in vier Stufen einstellbaren, festen Schrittweiten und einer festen Abtastfrequenz eine Motoransteuerung realisiert, die vier konstante Geschwindigkeiten zur Auswahl liefern kann. Dazu werden pro Sinusperiode jeweils 16, 32, 64 oder 128 äquidistante Tabellenpfätze aus einer gespeicherten Sinustabelle als gleichgerichteter Sinus abgetastet Die Erzeugung der Motorströme erfolgt in der bekannten Form durch D/A-Wandeln der abgetasteten Werte, Glätten und Verstärken der analog-gewandelten Signale und Erzeugung der benötigten Motorströme. Höhere Geschwindigkeiten, also mit mehr als 16 Abtastungen pro Sinusperiode, sind mit der angegebenen Motorsteuerung nicht möglich. Denn dann weisen die Ausgangssignale des D/A-Wandlers zu große Wertesprünge auf, so daß daraus durch einfaches Glätten mittels des Tiefpaßfilters keine annähernd sinusförmigen Motorströme erzeugt werden können. Weitere Nachteile der beschriebenen Motorsteuerung sind, daß lediglich vier fest vorgegebene Geschwindigkeiten und keine beliebigen Beschleunigungen bzw. Verzögerungen erzeugt werden können."

Es ist daher Aufgabe der vorliegenden Erfindung, ein Verfahren und eine Vorrichtung zur Ausübung des Verfahrens zur Ansteuerung eines Schrittmotors anzugeben, welche mit niedrigen Frequenzen und geringer CPU-Kapazität bei höchstmöglicher Auflösung und sehr gutem Rundlauf arbeiten. Weiterhin soll eine große Anzahl von Beschleunigungsprofilen und Geschwindigkeiten bei geringer CPU-Kapazität einstellbar sein.

Diese Aufgabe wird erfindungsgemäß durch die Merkmale der unabhängigen Patentansprüche gelöst. Weitere vorteilhafte Weiterbildungen der Erfindung sind Gegenstand der Unteransprüche.

Das erfindungsgemäße Verfahren arbeitet nicht mit einer variablen Schrittfrequenz und einer festen Schrittweite, sondern mit einer stets konstanten Schrittfrequenz aber variabler Schrittweite. Erfindungsgemäß werden aus einer in einem EPROM abgelegten Sinustabelle, welche die digitalen Strom-Sollwerte für den Motorstrom enthält, mit einer stets konstanten Abtastfrequenz pro Sinusperiode der Sinustabelle mindestens drei beliebig ausgewählte Strom-Sollwerte ausgelesen. Aus diesen Strom-Sollwerten mit beliebigen Wertesprüngen wird durch Tiefpaßfilterung ein glatter, sinusförmiger Verlauf der Strom-Sollwerte für den Motorstrom rekonstruiert und daraus der tatsächlich sinusförmige Motorstrom erzeugt.

Gegenüber den bekannten Verfahren werden nicht die aufeinanderfolgenden digitalen Strom-Sollwerte aus der Sinustabelle ausgelesen, sondern die auszulesenden digitalen Strom-Sollwerte werden entsprechend dem gewünschten Fahrverhalten des Motors ausgewählt. Da aufeinanderfolgende Tabellenplätze die Weite eines Mikroschrittes bestimmen, ist jedem Tabellenplatz der Sinustabelle auch eine bestimmte Motorposition zugeordnet. Durch die Auswahl der ausgelesenen Tabellenplätze wird daher die Schrittweite variiert. Weil die ausgewählten digitalen Strom-Sollwerte alle mit einer stets konstanten Abtastfrequenz, also in gleichen zeitlichen Abständen, ausgelesen werden, wird durch diese Variation der Schrittweite auch gleichzeitig die Drehgeschwindigkeit des Schrittmotors variiert. Bei großen Schrittweiten ergibt sich durch die konstante Abtastfrequenz zwangsläufig eine höhere Drehgeschwindigkeit als bei kleinen Schrittweiten.

Verschiedene konstante Drehgeschwindigkeiten des Schrittmotors werden erzeugt, indem mit konstanter Abtastfrequenz jeder n-te Wert aus der Sinustabelle ausgelesen wird, wobei n eine ganze Zahl ist. Für n = 1 wird jeder Strom-Sollwert der Sinustabelle ausgelesen und damit die niedrigste Frequenz des erzeugten sinusförmigen Motorstroms, also die niedrigste Drehgeschwindigkeit des Schrittmotors, eingestellt. Für n = 2 wird jeder zweite Strom-Sollwert aus der Sinustabelle ausgelesen. Weil bei konstanter Abtastfrequenz die Schrittweite in der Sinustabelle verdoppelt ist, ist damit die Frequenz des erzeugten sinusförmigen Motorstroms auch doppelt so groß wir für den Fall n = 1. Damit ist auch die Drehgeschwindigkeit des Schrittmotors doppelt so groß.

Die Zahl n stellt somit einen zeitlichen Stauchungsfaktor für die ausgelesene Sinustabelle und damit die Einstellgröße für die Frequenzen der erzeugten sinusförmigen Motorströme dar. Je größer die Zahl n und damit die Schrittweite zwischen den ausgelesenen Tabellenplätzen der Sinustabelle ist, umso höher sind die Frequenzen der erzeugten sinusförmigen Motorströme und umso schneller dreht der Schrittmotor. Solange die Schrittweite konstant gesetzt ist, ist auch die Drehgeschwindigkeit des Schrittmotors konstant.

Durch stufenweises Vergrößern oder Verringern der Schrittweite in der Sinustabelle lassen sich Beschleunigungen und Verzögerungen realisieren. Zur Einstellung einer beschleunigten Bewegung des Motors werden daher mit einer konstanten Abtastzeit ausgewählte digitale Strom-Sollwerte aus der Sinustabelle ausgelesen, wobei die Abstände zwischen den ausgelesenen Tabellenplätzen der Sinustabelle fortlaufend zunehmen. Zur Einstellung einer verzögerten Bewegung des Motors werden mit einer konstanten Abtastzeit ausgewählte digitale Strom-Sollwerte aus der Sinustabelle ausgelesen, wobei die Abstände zwischen den ausgelesenen Tabellenplätzen der Sinustabelle fortlaufend abnehmen.

Bei ausreichend hoher CPU-Kapazität könnten die erforderlichen digitalen Strom-Sollwerte für das Sinussignal auch laufend von der CPU berechnet werden, anstatt sie aus dem EPROM auszulesen. Aufgabengemäß wird hier aber eine Schrittmotorsteuerung mit niedriger CPU-Kapazität angegeben.

Zur Positions- und Drehgeschwindigkeitssteuerung des Schrittmotors wird eine CPU eingesetzt. Sie berechnet zu einer gewünschten Zielposition des Schrittmotors eine Folge von Zwischenpositionen, die nacheinander zum Erreichen der Zielposition angefahren werden sollen. Die Schrittweite kann dazu beliebig variiert werden. Sie ist durch die Abstände zwischen den auszulesenden Tabellenplätzen in der Sinustabelle gegeben. Wegen der konstanten Abtastfrequenz dreht der Schrittmotor bei großen Schritten mit großer Geschwindigkeit, bei kleinen Schritten mit kleiner Geschwindigkeit.

Zu jeder berechneten Zwischenposition wird von der CPU pro Phase des Motors der aus der Sinustabeile auszulesende digitale Strom-Sollwert bestimmt. Dann werden von der CPU nacheinander entsprechend der von ihr berechneten Zwischenposition-Folge die zugehörigen digitalen Strom-Sollwerte aus der Sinustabelle mit konstanter Abtastfrequenz ausgelesen.

Die von der CPU ausgelesenen digitalen Strom-Sollwerte werden nun in analoge Werte umgesetzt und daraus mit einem Tiefpaßfilter ein glatter sinusförmiger Verlauf der Strom-Sollwerte rekonstruiert, aus dem die Motorströme zur Erregung der Phasen des Schrittmotors abgeleitet werden. Dazu sind in den Unteransprüchen verschiedene mögliche Ausführungsformen aufgeführt.

In einer der möglichenen Ausgestaltungen des Verfahrens werden die aus der Sinustabelle ausgelesenen digitalen Strom-Sollwerte auf einen D/A-Wandler geführt. Am Ausgang des D/A-Wandlers erscheinen gestufte analoge Strom-Sollwerte. Ihre Grundform ist für kleine Drehgeschwindigkeiten, also für kleine Schrittweiten, annähernd sinusförmig. Für hohe Drehgeschwindigkeiten, also für große Schrittweiten, weisen die gestuften analogen Strom-Sollwerte große Amplitudensprünge und keinerlei Ähnlichkeit mit einem Sinus auf. Alle gestuften Strom-Sollwerte erscheinen mit der konstanten Abtastfrequenz. Diese lassen sich mit nur einem und zwar auf die Abtastfrequenz abgestimmten analogen Tiefpaßfilter unter bestimmten, hier gegebenen Voraussetzungen zur glatten Sinusform rekonstruieren.

Da nämlich die Abtastfrequenz konstant ist, gilt das Abtasttheorem (siehe dazu gängige Mathematiklehrbücher oder auch "Elektrische Kleinmotoren" von H. Moczala et al., Expert-Verlag, 1993, Seite 278-281). Danach können zeitlich veränderliche Signale nach einer Abtastung mit einer konstanten Abtastfrequenz aus den abgetasteten Werten vollständig rekonstruiert werden, wenn die Abtastfrequenz mindestens den doppelten Wert der höchsten zu rekonstruierenden Frequenz aufweist.

Für das erfindungsgemäße Verfahren bedeutet dies, daß die Abtastfrequenz mehr als doppelt so groß gewählt werden muß wie die größte zu erzeugende Sinusfrequenz, welche der größten einstellbaren Drehgeschwindigkeit des Schrittmotors im Vollschrittbetrieb entspricht. Das ist dann die Abtastfrequenz, bei welcher mit nur vier Abtastungen pro Periode der Sinustabelle der Motor mit maximaler Geschwindigkeit verfährt. Mit derselben niedrigen Abtastfrequenz sind dann auch alle anderen, also kleineren Verfahrgeschwindigkeiten möglich, nämlich durch Abtastung von mehr als vier Sollwerten pro Sinusperiode.

Daraus folgt, daß im Verlauf einer vollständigen Sinusperiode mindestens drei Abtastungen aus der Sinustabelle als Stützpunkte für das Filter erforderlich sind, um die Sinuskurve vollständig zu rekonstruieren. Im Vollschrittbetrieb eines Zwei-Phasen-Schrittmotors, also mit vier Schritten für eine volle Sinusperiode, sind aber bereits vier Stützpunkte vorhanden, weil die Sinustabelle im EPROM an vier Stellen abgetastet wird. Damit ist bereits im Vollschrittbetrieb die Forderung des Abtasttheorems stets erfüllt. Für den Mikroschrittbetrieb mit entsprechend mehr Abtastungen ist die Forderung dann ohnehin erfüllt.

Zur Rekonstruktion eines sinusförmigen Verlaufs der Strom-Sollwerte für die Ansteuerung des Schrittmotors wird ein geeignetes Tiefpaßfilter eingesetzt. Aus den gestuften analogen Strom-Sollwerten rekonstruiert dieses Tiefpaßfilter eine glatte Sinuskurve. Das Tiefpaßfilter muß alle Frequenzen herausfiltern, die nicht der zu erzeugenden Sinusfrequenz entsprechen. Dazu muss die Filter-Grenzfrequenz des Tiefpaßfilters kleiner als die halbe Abtastfrequenz der CPU gewählt werden. Um das Tiefpaßfilter zu vereinfachen, kann mit einer höheren konstanten Abtastfrequenz als der niedrigst möglichen gearbeitet werden. Am Ausgang des Tiefpaßfilters erscheint dann ein glattes Sinussignal der Strom-Sollwerte, welches auf den Eingang einer Endstufe geführt wird, die daraus den Motorstom erzeugt.

In einer anderen möglichen Ausgestaltung des Verfahrens werden die aus der Sinustabelle ausgelesenen digitalen Strom-Sollwerte anstatt auf einen D/A-Wandler auf einen Pulsweitenmodulator geführt. Dieser erzeugt für jeden eingehenden digitalen Strom-Sollwert aus der Sinustabelle an seinem Ausgang eine hochfrequente Pulsfolge mit konstanter Pulsweitenmodulationsfrequenz, im folgenden kurz PWM-Frequenz genannt. Der analoge Mittelwert dieser erzeugten Pulsfolge ist jeweils der Höhe des Eingangssignals proportional.

Die vom Pulsweitenmodulator erzeugten hochfrequenten Pulsfolgen werden auf den Eingang eines Tiefpaßfilters geführt. Die konstante PWM-Frequenz der vom Pulsweitenmodulator erzeugten Pulsfolgen muß größer als die Abtastfrequenz der CPU, mindestens jedoch gleich groß, sein und damit mehr als doppelt so groß wie die Grenzfrequenz des Tiefpaßfilters. Das Tiefpaßfilter bildet zu jeder eingehenden hochfrequenten Pulsfolge den analogen Mittelwert und filtert dabei sowohl die PWM-Frequenz als auch die Abtastfrequenz heraus. Damit rekonstruiert das Tiefpaßfilter direkt ein glattes analoges Sinussignal für die Strom-Sollwerte entsprechend den von der CPU ausgelesenen Strom-Sollwerten. Am Ausgang des Tiefpaßfilters erscheint daher ein glattes Sinussignal der Strom-Sollwerte, welches auf den Eingang einer Endstufe geführt wird.

Für jede Phase des Schrittmotors werden aus den ausgelesenen Strom-Sollwerten der Sinustabelle auf eine der beschriebenen Weisen, also entweder durch eine Kombination aus D/A-Wandler mit nachfolgendem Tiefpaßfilter oder durch eine Kombination aus Pulsweitenmodulator mit nachfolgendem Tiefpaßfilter, die entsprechend phasenverschobenen, tatsächlich sinusförmigen Verläufe der Strom-Sollwerte erzeugt und auf je eine Endstufe geführt. Die Ausgänge der Endstufen liefern die phasenverschobenen, sinusförmigen Motorströme.

Mit vorbekannten Ansteuerungen fährt ein Schrittmotor entsprechend den sinusförmig gestuften Motorstromwerten in kleinen ruckartigen Schritten an seine Sollposition. Bei hohen Verfahrgeschwindigkeiten und dazu verminderter Positionsauflösung, also größeren Schritten, führt ein Betrieb mit vorbekannten Ansteuerungen zu störend lauten Betriebsgeräuschen des Motors und störenden Vibrationen. Demgegenüber verfährt ein Schrittmotor mit einer Ansteuerung nach dem erfindungsgemäßen Verfahren aufgrund der tatsächlich sinusförmigen Motorströme ohne Sprünge und damit ruhig und vibrationsarm an seine Sollposition.

Das Verfahren eignet sich zum Positionierbetrieb für alle permanent magnetisch erregten Schrittmotoren, also auch für Hybrid-Schrittmotoren und Linearschrittantriebe, sowie generell für alle Motoren mit mindestens zwei Spulen und phasenversetzten Motorströmen, wie beispielsweise Synchronmotoren. Ebenso ist eine Anwendung des Verfahrens auf Mehrphasen-Schrittmotoren möglich, indem beispielsweise für jede Phase aus der Sinustabelle die benötigten digitalen Strom-Sollwerte mit der erforderlichen Phasenverschiebung ausgelesen werden und daraus erfindungsgemäß die für die verschiedenen Phasen des Motors erforderlichen phasenverschobenen Motorströme erzeugt werden. Mit einer leistungsfähigen CPU ist es auch möglich, die digitalen Strom-Sollwerte der Sinustabelle laufend zu berechnen, anstatt sie aus einer Sinustabelle zu entnehmen.

Gegenüber bisher bekannten Schrittmotorsteuerungen im Mikroschrittbetrieb arbeitet das erfindungsgemäße Verfahren für alle Geschwindigkeiten und alle Feinpositionierungen stets mit derselben niedrigen Abtastfrequenz. Daher kann mit dem neuen Verfahren bei konstanter Abtastfrequenz lediglich durch Vorgabe einer einzigen möglichst fein geteilten Sinustabelle die Positionsauflösung beliebig gesteigert werden, sogar bei gleichbleibender Maximalgeschwindigkeit. Da erfindungsgemäß eine einzige fein geteilte Sinustabelle zur Einstellung aller Schrittweiten ausreicht, entfällt auch die beim vorbekannten Verfahren erforderliche Speicherkapazität für die Speicherung diverser Sinustabellen für verschiedene Schrittweiten.

Das neue Verfahren zeichnet sich durch eine sehr große Zahl an möglichen Geschwindigkeiten und Beschleunigungsprofilen mit beliebig hoher Positionsauflösung bei gleichzeitig optimiertem Rundlauf aus. Damit ist das neue Verfahren den bisherigen Schrittmotoransteuerungen deutlich überlegen, denn bei diesen konnten hohe Geschwindigkeiten nur unter Verringerung der Positionsauflösung oder durch Erhöhung der Schrittfrequenz mit den bereits erläuterten Nachteilen erreicht werden.

Die Größe der konstanten Abtastfrequenz bestimmt die Anzahl der Rechenoperationen der CPU pro Zeiteinheit und beeinflußt damit die erforderliche CPU-Kapazität. Da das erfindungsgemäße Verfahren bei allen Geschwindigkeiten und Auflösungen mit derselben niedrigen, konstanten Abtastfrequenz arbeitet, wird auch stets nur dieselbe geringe CPU-Kapazität benötigt.

Die Erfindung wird anhand zweier Ausführungsbeispiele mit Hilfe der schematischen Zeichnungen näher erläutert.

Es zeigen:

Fig. 1 :     Schaltbild einer ersten erfindungsgemäßen Vorrichtung mit Digital-Analog-Umsetzung durch einen D/A-Wandler;

Fig. 2 :     Schaltbild einer zweiten erfindungsgemäßen Vorrichtung mit Digital-Analog-Umsetzung durch einen Pulsweitenmodulator;

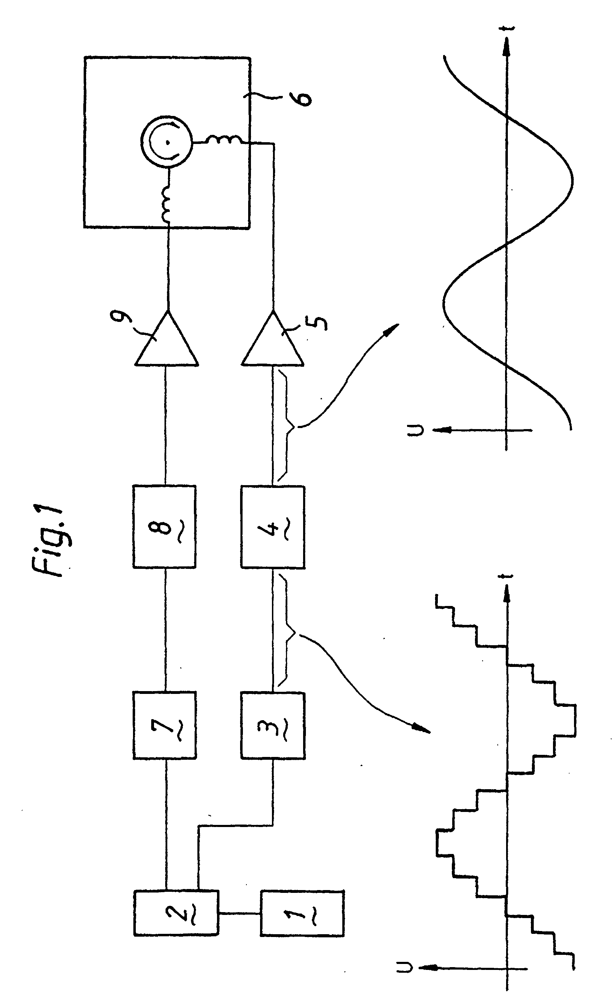

In **Fig. 1** ist in einem EPROM 1 eine Sinustabelle gespeichert, die die digitalen Strom-Sollwerte für den zu erzeugenden Motorstrom enthält. Die Anzahl der Tabellenplätze bestimmt die mögliche Positionsauflösung des Motors. Eine CPU 2 liest mit einer konstanten Abtastfrequenz pro Sinusperiode mindestens drei ausgewählte, digitale Strom-Sollwerte aus der Sinustabelle im EPROM 1 aus.

Im vorliegenden Beispiel wird zur Vereinfachung angenommen, daß eine konstante Drehgeschwindigkeit für den Motor eingestellt werden soll. Dazu werden die digitalen Strom-Sollwerte aus der Sinustabelle mit gleichmäßigen Abständen zwischen den auszulesenden Tabellenplätzen aus der Sinustabelle ausgelesen. Im vorliegenden Beispiel wird angenommen, daß die Sinustabelle mit einer großen Schrittweite ausgelesen wird. Dadurch wird die Frequenz des zu erzeugenden Motorstroms hoch und damit auch die Drehgeschwindigkeit des Schrittmotors hoch sein.

Die von der CPU 2 aus der Sinustabelle ausgelesenen digitalen Strom-Sollwerte werden auf einen D/A-Wandler 3 geführt. Am Ausgang des D/A-Wandlers 3 erscheinen gestufte, analoge Strom-Sollwerte, die separat in **Fig. 1** schematisch dargestellt sind. Sie weisen in dem dargestellten Fall einen annähernd sinusförmigen Verlauf auf. Da pro Periodendauer des Sinus nur wenige Abtastungen vorgenommen werden, weisen die analogen Ausgangssignale des D/A-Wandlers 3 sehr große Sprünge auf.

Sie werden auf den Eingang eines Tiefpaßfilters 4 geführt, an dessen Ausgang das in **Fig. 1** separat dargestellte vollständig rekonstruierte Sinussignal der Strom-Sollwerte erscheint. Dieses glatte Sinussignal wird auf eine Endstufe 5 geführt, die daraus den sinusförmigen Motorstrom für die erste Phase eines zweiphasigen Schrittmotors 6 erzeugt.

Für die zweite Phase des Schrittmotors 6 wird der Motorstrom ebenfalls nach dem erfindungsgemäßen Verfahren in der bereits beschriebenen Weise erzeugt. Dazu liest die CPU 2 ausgewählte digitale Strom-Sollwerte für den Motorstrom der zweiten Phase des Schrittmotors 6 aus dem EPROM 1 aus. Die digitalen Strom-Sollwerte werden dazu um neunzig Grad phasenversetzt gegenüber denen für die erste Phase des Schrittmotors 6 aus der Sinustabelle ausgelesen. Die ausgelesenen digitalen Strom-Sollwerte werden auf einen D/A-Wandler 7 geführt, an dessen Ausgang gestufte, analoge Strom-Sollwerte erscheinen, die um neunzig Grad phasenverschoben gegenüber den nach dem D/A-Wandler 3 erscheinenden sind.

Die Ausgangssignale des D/A-Wandlers 7 werden auf den Eingang eines Tiefpaßfilters 8 geführt, an dessen Ausgang ein vollständig rekonstruiertes Sinussignal erscheint. Dieses ist um neunzig Grad phasenverschoben gegenüber dem nach dem Tiefpaßfilter 4 erscheinenden. Das Ausgangssignal des Tiefpaßfilters 8 wird auf den Eingang einer Endstufe 9 geführt, die den sinusförmigen Motorstrom für die zweite Phase des Schrittmotors 6 erzeugt.

Solange beide Phasen des Schrittmotors 6 mit den erzeugten sinusförmigen, phasenverschobenen Motorströmen versorgt werden, dreht der Schrittmotor 6 mit einer konstanten Geschwindigkeit. Die Endposition des Schrittmotors 6 wird bestimmt durch die beiden letzten, um neunzig Grad phasenversetzten, von der CPU 2 ausgelesenen digitalen Strom-Sollwerte in der Sinustabelle, die noch zu Motorströmen für die beiden Phasen verarbeitet werden. Damit dreht der Motor an seine Endposition.

Solange dem Schrittmotor 6 keine sinusförmigen, phasenverschobenen Motorströme zugeführt werden, also solange von der CPU 2 keine weiteren digitalen Strom-Sollwerte aus der Sinustabelle ausgelesen werden, bleibt er stehen. Erst durch das Auslesen weiterer digitaler, um neunzig Grad phasenversetzter Strom-Sollwerte werden wieder sinusförmige, phasenverschobene Motorströme erzeugt und der Schrittmotor 6 wieder in Bewegung versetzt.

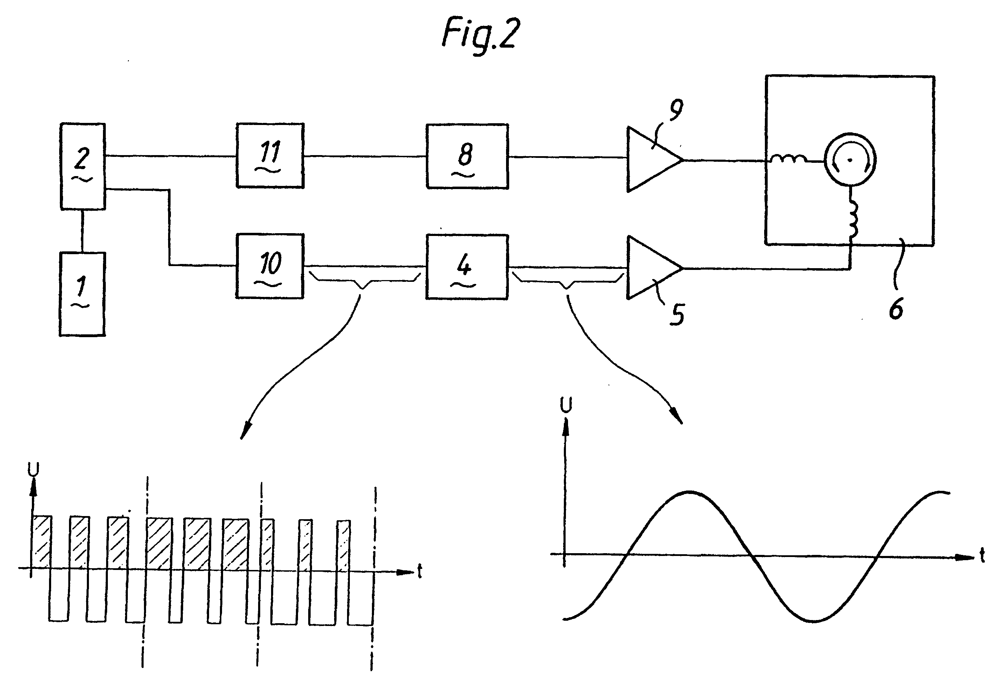

In **Fig. 2** sind gegenüber der **Fig. 1** die D/A-Wandler 3,7 durch die Pulsweitenmodulatoren 10,11 ersetzt. Diese Ausführungsform ist besonders vorteilhaft, weil die Pulsweitenmodulatoren in vielen im Handel erhältlichen CPU-Bausteinen bereits enthalten sind. Dies erspart Kosten und Schaltungsaufwand. Eine CPU 2 liest aus der in einem EPROM 1 gespeicherten Sinustabelle mit einer konstanten Abtastfrequenz ausgewählte digitale Strom-Sollwerte aus. Auch hier muß zur Erfüllung des Abtasttheorems die Bedingung erfüllt sein, daß pro Sinusperiode mindestens drei ausgewählte digitale Strom-Sollwerte aus der Sinustabelle ausgelesen werden. Diese werden auf den Eingang des Pulsweitenmodulators 10 geführt.

Dieser setzt die digitalen Strom-Sollwerte in hochfrequente Pulsfolgen mit konstanter PWM-Frequenz um. Der analoge Mittelwert der Pulsfolge am Ausgang des Pulsweitenmodulators 10 ist jeweils der Höhe seines digitalen Eingangssignals proportional. Das heißt beispielsweise, daß ein digitales Eingangssignal gleich Null am Ausgang des Pulsweitenmodulators 10 eine Pulsfolge erzeugt, deren Mittelwert aufgrund der Pulsbreiten der einzelnen Pulse auch gleich Null ist. Für ein digitales Eingangssignal größer als Null verbreitern sich die positiven Anteile der Pulse des Ausgangssignals dergestalt, daß der Mittelwert der neuen Pulsfolge größer als Null und der Höhe des Eingangssignals proportional ist. Für ein digitales Eingangssignal kleiner als Null verschmälern sich die positiven Anteile der Pulse des Ausgangssignals dergestalt, daß der Mittelwert der neuen Pulsfolge kleiner als Null und der Höhe des Eingangssignal proportional ist. Die am Ausgang des Pulsweitenmodulators 10 erscheinende Pulsfolge bei sehr großen Schrittweiten ist separat in **Fig. 2** schematisch dargestellt.

Die vom Pulsweitenmodulator 10 erzeugten hochfrequenten Pulsfolgen werden auf den Eingang eines Tiefpaßfilters 4 geführt. Die PWM-Frequenz der vom Pulsweitenmodulator 10 erzeugten Pulsfolgen ist mindestens gleich der Abtastfrequenz der CPU 2 oder größer und damit mehr als doppelt so hoch wie die Grenzfrequenz des Tiefpaßfilters 4. Das Tiefpaßfilter 4 bildet zu jeder eingehenden hochfrequenten Pulsfolge den analogen Mittelwert und filtert dabei sowohl die PWM-Frequenz des Pulsweitenmodulators 10 als auch die Abtastfrequenz der CPU 2 heraus. Damit werden alle Frequenzen, die nicht dem zu reproduzierenden Sinussignal entsprechen, herausgefiltert. Damit liefert das Tiefpaßfilter 4 ein vollständiges glattes Sinussignal der Strom-Sollwerte an seinem Ausgang. Das am Ausgang des Tiefpaßfilters 4 erscheinende, vollständig rekonstruierte, glatte Sinussignal ist separat in **Fig. 2** dargestellt. Dieses glatte Sinussignal wird auf den Eingang einer Endstufe 5 geführt, die daraus den Motorstrom für die erste Phase eines Schrittmotors 6 erzeugt.

Entsprechend wird der Motorstrom für die zweite Phase des Schrittmotors 6 erzeugt. Dazu werden von der CPU 2 mit einer konstanten Abtastfrequenz aus dem EPROM 1 ausgewählte digitale Strom-Sollwerte ausgelesen und auf den Eingang des Pulsweitenmodulators 11 geführt. Die digitalen Strom-Sollwerte werden dazu um neunzig Grad phasenversetzt gegenüber denen für die erste Phase des Schrittmotors 6 aus der Sinustabelle ausgelesen.

Für jeden ankommenden digitalen Strom-Sollwert liefert der Pulsweitenmodulator 11 an seinem Ausgang eine hochfrequente Pulsfolge mit einem dem Eingangssignal proportionalem analogen Mittelwert. Die vom Pulsweitenmodulator 11 erzeugten Pulsfolgen werden auf den Eingang eines Tiefpaßfilters 8 geführt. Dieses rekonstruiert, wie bereits oben beim Tiefpaßfilter 4 beschrieben, aus den eingehenden Pulsfolgen ein vollständiges glattes Sinussignal der Strom-Sollwerte. Das am Ausgang des Tiefpaßfilters 8 erscheinende rekonstruierte Sinussignal ist um 90 Grad phasenverschoben gegenüber dem in **Fig. 2** separat dargestellten rekonstruierten Sinussignal nach dem Tiefpaßfilter 4. Das Sinussignal am Ausgang des Tiefpaßfilters 8 wird auf den Eingang einer Endstufe 9 geführt, die daraus den sinusförmigen Motorstrom für die zweite Phase des Schrittmotors 6 erzeugt.

Auch in diesem Beispiel verfährt der Schrittmotor 6, solange seine beiden Phasen mit sinusförmigen, phasenverschobenen Motorströmen versorgt werden. Die angefahrene Endposition des Schrittmotors 6 wird ebenfalls durch die beiden letzten, aus der Sinustabelle ausgelesenen, digitalen Strom-Sollwerte bestimmt, die in Motorströme umgesetzt werden.

Bezugszeichenliste

1 -    EPROM
2 -    CPU
3 -    D/A-Wandler
4 -    Tiefpaßfilter
5 -    Endstufe
6 -    zweiphasiger Schrittmotor
7 -    DIA-Wandler

8 -    Tiefpaßfilter
9 -    Endstufe
10 -    Pulsweitenmodulator
11 -    Pulsweitenmodulator

**Patentansprüche**

1.    Verfahren zur Ansteuerung eines Schrittmotors (6), bei dem digitale Strom-Sollwerte in Form einer Sinustabelle gespeichert sind und aus dieser Sinustabelle mit einer konstanten Abtastfrequenz $f_A$ ausgelesen werden und bei dem aus den ausgelesenen digitalen Strom-Sollwerten ein Motorstrom zur Erregung einer Phase des Schrittmotors (6) abgeleitet wird,
   **dadurch gekennzeichnet, daß**

   a) aus den Tabellenplätzen der Sinustabelle mindestens drei digitale Strom-Sollwerte pro Periodendauer ausgewählt und ausgelesen werden, wobei bereits drei ausgelesene Strom-Sollwerte pro Periodendauer ausreichend sind und wobei die Abstände zwischen den ausgelesenen Tabellenplätzen beliebig gleichmäßig als auch ungleichmäßig variiert werden können,
   b) jeder ausgelesene digitale Strom-Sollwert in ein diskretes analoges Signal umgesetzt wird und
   c) aus den diskreten analogen Signalen mittels eines Tiefpassfilters mit einer grenzfrequenz $f_{grenz} < \frac{1}{2} f_A$ alle Frequenzen, die nicht dem zu reproduzierenden Sinussignal entsprechen, unterdrückt werden und ein glattes Sinussignal rekonstruiert wird, aus welchem der Motorstrom für die Erregung einer Phase des Schrittmotors (6) abgeleitet wird.

2.    Verfahren nach Anspruch 1,
   **dadurch gekennzeichnet, daß**
   die ausgelesenen digitalen Strom-Sollwerte mit einem D/A-Wandler (3,7) in diskrete analoge Signale umgesetzt werden.

3.    Verfahren nach Anspruch 1,
   **dadurch gekennzeichnet, daß**
   die ausgelesenen digitalen Strom-Sollwerte zur Umsetzung in diskrete analoge Signale mit einem Pulsweitenmodulator (10,11) moduliert werden.

4.    Verfahren nach einem der vorhergehenden Ansprüche,
   **dadurch gekennzeichnet, daß**
   zur Einstellung einer konstanten Geschwindigkeit des Schrittmotors (6) digitale Strom-Sollwerte mit gleichen Abständen der Tabellenplätze ausgelesen werden.

**5.** Verfahren nach einem der vorhergehenden Ansprüche,
**dadurch gekennzeichnet, daß**
zur Einstellung einer beschleunigten Bewegung des Schrittmotors (6) digitale Strom-Sollwerte mit fortlaufend zunehmenden Abständen der Tabellenplätze ausgelesen werden.

**6.** Verfahren nach einem der vorhergehenden Ansprüche,
**dadurch gekennzeichnet, daß**
zur Einstellung einer verzögerten Bewegung des Schrittmotors (6) digitale Strom-Sollwerte mit fortlaufend abnehmenden Abständen der Tabellenplätze ausgelesen werden.

**7.** Verfahren nach einem der vorhergehenden Ansprüche,
**dadurch gekennzeichnet, daß**
die ausgewählten digitalen Strom-Sollwerte fortlaufend berechnet und zwischengespeichert werden.

**8.** Vorrichtung zur Ausübung des Verfahrens nach Anspruch 1 zur Ansteuerung eines Schrittmotors (6) mit

- einem EPROM (1) zur Speicherung von Strom-Sollwerten in Form einer digitalen Sinustabelle,
- einer CPU (2) zum Erzeugen einer Abtastfrequenz $f_A$ für die Abtastung der digitalen Strom-Sollwerte aus der digitalen Sinustabelle,
- und einer Endstufe zur Erzeugung des Motorstroms für eine Phase des Schrittmotors (6) aus den in analoge Werte umgesetzten Strom-Sollwerten,

**gekennzeichnet durch**,

- eine CPU (2) mit konstanter Abtastfrequenz für die digitalen Strom-Sollwerte
- einen elektronischen Umsetzer für die Umwandlung der abgetasteten digitalen Strom-Sollwerte aus ausgewählten, beliebig gleichmäßig oder ungleichmäßig beabstandeten Tabellenplätzen in diskrete analoge Strom-Sollwerte und
- ein vor die Endstufe geschaltetes Tiefpaßfilter mit einer Grenzfrequenz $f_{Grenz}$ mit $f_{grenz} < \frac{1}{2} f_A$.

**9.** Vorrichtung nach Anspruch 8
**dadurch gekennzeichnet, daß**
der elektronische Umsetzer ein D/A-Wandler (3) ist.

**10.** Vorrichtung nach Anspruch 8
**dadurch gekennzeichnet, daß**
der elektronische Umsetzer ein Pulsweitenmodulator (10) mit einer PWM-Frequenz ≥ der Abtastfrequenz ist.

**Claims**

**1.** Method for driving a stepping motor (6), in which digital desired current values are stored in the form of a sine table and are read from this sine table at a constant sampling frequency $f_A$, and in which a motor current for exciting a phase of the stepping motor (6) is derived from the digital desired current values that are read out,
**characterized in that**

a) at least three digital desired current values per period are selected and read from the table locations of the sine table, three desired current values that are read out per period already being sufficient and the spacings between the table locations that are read being able to be varied arbitrarily uniformly as well as non-uniformly,
b) each digital desired current value that is read out is converted into a discrete analogue signal, and
c) from the discrete analogue signals, by means of a low-pass filter with a cut-off frequency $f_{cut-off} < \frac{1}{2}f_A$, all frequencies which do not correspond to the sinusoidal signal to be reproduced are suppressed and a smooth sinusoidal signal is reconstructed, the motor current for exciting a phase of the stepping motor (6) being derived from said sinusoidal signal.

**2.** Method according to Claim 1,
**characterized in that**
the digital desired current values that are read out are converted into discrete analogue signals by a D/A converter (3, 7).

**3.** Method according to Claim 1,
**characterized in that**
the digital desired current values that are read out are modulated by a pulse width modulator (10, 11) for the purpose of conversion into discrete analogue signals.

**4.** Method according to one of the preceding claims,
**characterized in that**
in order to set a constant speed of the stepping motor (6), digital desired current values are read out with identical spacings between the table locations.

**5.** Method according to one of the preceding claims,
**characterized in that**
in order to set an accelerated movement of the stepping motor (6), digital desired current values are read out with continually increasing spacings between the table locations.

**6.** Method according to one of the preceding claims,

**characterized in that**

in order to set a decelerated movement of the stepping motor (6), digital desired current values are read out with continually decreasing spacings between the table locations.

7. Method according to one of the preceding claims, **characterized in that** the selected digital desired current values are continually calculated and buffer-stored.

8. Apparatus for performing the method according to Claim 1 for driving a stepping motor (6), having

   - an EPROM (1) for storing desired current values in the form of a digital sine table,
   - a CPU (2) for generating a sampling frequency $f_A$ for sampling the digital desired current values from the digital sine table,
   - and an output stage for generating the motor current for a phase of the stepping motor (6) from the desired current values that have been converted into analogue values,

   **characterized by**

   - a CPU (2) with a constant sampling frequency for the digital desired current values
   - an electronic converter for converting the sampled digital desired current values from selected table locations which are spaced apart arbitrarily uniformly or non-uniformly into discrete analogue desired current values, and
   - a low-pass filter connected upstream of the output stage and having a cut-off frequency $f_{cut\text{-}off}$ where $f_{cut\text{-}off} < \frac{1}{2}f_A$.

9. Apparatus according to Claim 8, **characterized in that** the electronic converter is a D/A converter (3).

10. Apparatus according to Claim 8, **characterized in that** the electronic converter is a pulse width modulator (10) having a PWM frequency $\geq$ the sampling frequency.

**Revendications**

1. Procédé de commande d'un moteur pas à pas (6), dans lequel on mémorise des valeurs de consigne numériques de courant sous la forme d'une table de sinus et on les lit dans cette table de sinus avec une fréquence de lecture constante $f_A$ et dans lequel on déduit à partir des valeurs de consigne numériques de courant lues un courant de moteur en vue d'exciter une phase du moteur pas à pas (6), **caractérisé en ce que**

   a) on sélectionne et on lit au moins trois valeurs de consigne numériques de courant par durée de période à partir des postes de la table de sinus, trois valeurs de consigne de courant lues par durée de période étant déjà suffisantes et les distances entre les postes de la table lus pouvant être modifiées à volonté de façon régulière ou irrégulière ;

   b) on convertit chaque valeur de consigne numérique de courant lue en un signal analogique discret ; et

   c) on reconstruit un signal sinusoïdal lisse à partir des signaux analogiques discrets, et toutes les fréquences qui ne correspondent pas au signal sinusoïdal à reproduire ont été supprimées au moyen d'un filtre passe-bas avec une fréquence limite $f_{lim} < \frac{1}{2} f_A$, à partir duquel on déduit le courant de moteur en vue d'exciter une phase du moteur pas à pas (6).

2. Procédé suivant la revendication 1, **caractérisé en ce que** l'on convertit les valeurs de consigne numériques de courant lues en signaux analogiques discrets au moyen d'un convertisseur D/A (3, 7).

3. Procédé suivant la revendication 1, **caractérisé en ce que** l'on module les valeurs de consigne numériques de courant lues avec un modulateur d'impulsions en largeur (10, 11) en vue de la conversion en signaux analogiques discrets.

4. Procédé suivant l'une quelconque des revendications précédentes, **caractérisé en ce qu'**on lit des valeurs de consigne numériques de courant avec des distances égales des postes de la table en vue de régler une vitesse constante du moteur pas à pas (6).

5. Procédé suivant l'une quelconque des revendications précédentes, **caractérisé en ce qu'**on lit des valeurs de consigne numériques de courant avec des distances constamment croissantes des postes de la table en vue de régler un mouvement accéléré du moteur pas à pas (6).

6. Procédé suivant l'une quelconque des revendications précédentes, **caractérisé en ce qu'**on lit des valeurs de consigne numériques de courant avec des distances constamment décroissantes des postes de la table en vue de régler un mouvement retardé du moteur pas à pas (6).

7. Procédé suivant l'une quelconque des revendications précédentes, **caractérisé en ce que** l'on calcule et on mémorise temporairement en continu les valeurs de consigne numériques de courant sélectionnées.

8.  Dispositif pour la mise en oeuvre du procédé suivant la revendication 1 pour la commande d'un moteur pas à pas (6), avec

    -   une EPROM (1) pour mémoriser des valeurs de consigne de courant sous la forme d'une table de sinus numérique ;
    -   une CPU (2) pour produire une fréquence de lecture $f_A$ pour la lecture des valeurs de consigne numériques de courant à partir de la table de sinus numérique,
    -   et un étage final pour produire le courant de moteur pour une phase du moteur pas à pas (6) à partir des valeurs de consigne de courant converties en valeurs analogiques,

    **caractérisé par**

    -   une CPU (2) avec une fréquence de lecture constante pour les valeurs de consigne numériques de courant,
    -   un convertisseur électronique pour la conversion des valeurs de consigne numériques de courant lues à partir de postes de la table sélectionnés, espacés à volonté de façon régulière ou irrégulière, en valeurs de consigne analogiques discrètes de courant, et
    -   un filtre passe-bas monté avant l'étage final avec une fréquence limite $f_{lim} < ½ f_A$.

9.  Dispositif suivant la revendication 8, **caractérisé en ce que** le convertisseur électronique est un convertisseur D/A (3).

10. Dispositif suivant la revendication 8, **caractérisé en ce que** le convertisseur électronique est un modulateur d'impulsions en largeur (10) avec une fréquence de modulation d'impulsions en largeur supérieure ou égale à la fréquence de lecture.

Fig.1

EP 0 958 651 B1

Fig.2

EP 0 958 651 B1